# EUROPEAN PATENT APPLICATION

(11) **EP 1 897 835 A1**
(43) Date of publication of application: **12.03.2008**
(21) Application number: 05765297.6
(22) Date of filing: 28.06.2005
(51) Int. Cl.: B66B 11/08

(54) **BRAKE DEVICE FOR ELEVATOR**

(71) Applicant: MITSUBISHI DENKI KABUSHIKI KAISHA, Chiyoda-ku Tokyo 100-8310 (JP)
(72) Inventor: UOZUMI, Hisanori Mitsubishi Denki Kabushiki Kaisha, Tokyo 100-8310 (JP)
(74) Representative: HOFFMANN EITLE
(86) International application number: PCT/JP2005/011816
(87) International publication number: WO 2007/000810

(57) **Abstract**

A brake device for an elevator has a rotary body, a braking body which is movable so that the braking body comes into contact with and moves away from the rotary body, a movable member for being displaced together with the braking body, an urging body for urging the movable member in such a direction that the braking body moves into contact with the rotary body, and an electromagnet for displacing, against the urging by the urging body, the movable member in such a direction that the braking body moves away from the rotary body. The braking body brakes rotation of the rotary body through contact with the rotary body. The electromagnet, which has an electromagnetic coil, generates an electromagnetic attraction force for attracting the movable member through energization of the electromagnetic coil. The movable member has a plurality of split strips superposed on each other, and an insulating body interposed between the respective split strips.

## Description

### Technical Field

The present invention relates to a brake device for an elevator for braking the raising/lowering of a car and a counterweight.

### Background Art

Conventionally, there has been proposed a brake device for an elevator which is structured such that a brake shoe is pressed against an inner peripheral surface of a brake drum to brake rotation of the brake drum. A fixed core provided with an electromagnetic coil is disposed inside the brake drum. A movable core, which is displaced together with the brake shoe, is provided between the fixed core and the brake shoe. When energization of the electromagnetic coil is started, the movable core is attracted by the fixed core, so the brake shoe is opened away from the inner peripheral surface of the brake drum. When energization of the electromagnetic coil is stopped, the movable core is displaced away from the fixed core due to an urging force of a spring, so the brake shoe is pressed against the inner peripheral surface of the brake drum (see Patent Document 1).

Patent Document 1: JP 2002-242961 A

### Disclosure of the Invention

### Problem to be solved by the Invention

In the conventional brake device for an elevator, however, the movable core is designed as a single mass of iron, so the overcurrent loss caused through energization of the electromagnetic coil increases. With a great overcurrent loss in the movable core, a magnetic flux does not immediately disappear even when energization of the electromagnetic coil is stopped. Accordingly, there remains an attraction force between the movable core and the fixed core even after energization of the electromagnetic coil has been stopped. As a result, a long time is required until the brake shoe is pressed against the brake drum. That is, the time for a braking operation of the brake device is prolonged.

The present invention has been made to solve the above-mentioned problem, and it is therefore an object of the present invention to obtain a brake device for an elevator which makes it possible to reduce a time for a braking operation.

### Means for solving the Problem

A brake device for an elevator according to the present invention includes: a rotary body; a braking body, which is movable so that the braking body comes into contact with and moves away from the rotary body, for braking rotation of the rotary body through contact with the rotary body; a movable member for being displaced together with the braking body; an urging body for urging the movable member in such a direction that the braking body comes into contact with the rotary body; and an electromagnet, which has an electromagnetic coil, for generating an electromagnetic attraction force for attracting the movable member through energization of the electromagnetic coil, and displacing the movable member through generation of the electromagnetic attraction force, in such a direction that the braking body moves away from the rotary body, against urging by the urging body, in which the movable member has apluralityofsplit strips superposed on each other, and an insulating body interposed between the respective split strips.

### Brief Description of the Drawings

Fig. 1 is a sectional view showing part of a brake device for an elevator according to Embodiment 1 of the present invention.
Fig. 2 is a plan view showing a movable member of Fig. 1.
Fig. 3 is a sectional view showing part of the movable member and an electromagnet of Fig. 1.
Fig. 4 is a lateral view showing a state where one of split plates, the other split plate, and an insulating sheet of Fig. 3 are yet to be combined with one another.
Fig. 5 is a lateral view showing a state where the one of the split plates, the other split plate, and the insulating sheet of Fig. 4 have been combined with one another to constitute the movable member.
Fig. 6 is a lateral view showing one of split plates and an insulating film forming body in a brake device for an elevator according to Embodiment 2 of the present invention.
Fig. 7 is a sectional view showing another example of the brake device for an elevator according to Embodiment 2 of the present invention.
Fig. 8 is a lateral view showing one of split plates, the other split plate, and an insulating sheet in a brake device for an elevator according to Embodiment 3 of the present invention.
Fig. 9 is a lateral view showing another example of the brake device for an elevator according to Embodiment 3 of the present invention.

### Best Mode for carrying out the Invention

Preferred embodiments of the present invention will be described hereinafter with reference to the drawings.

### Embodiment 1

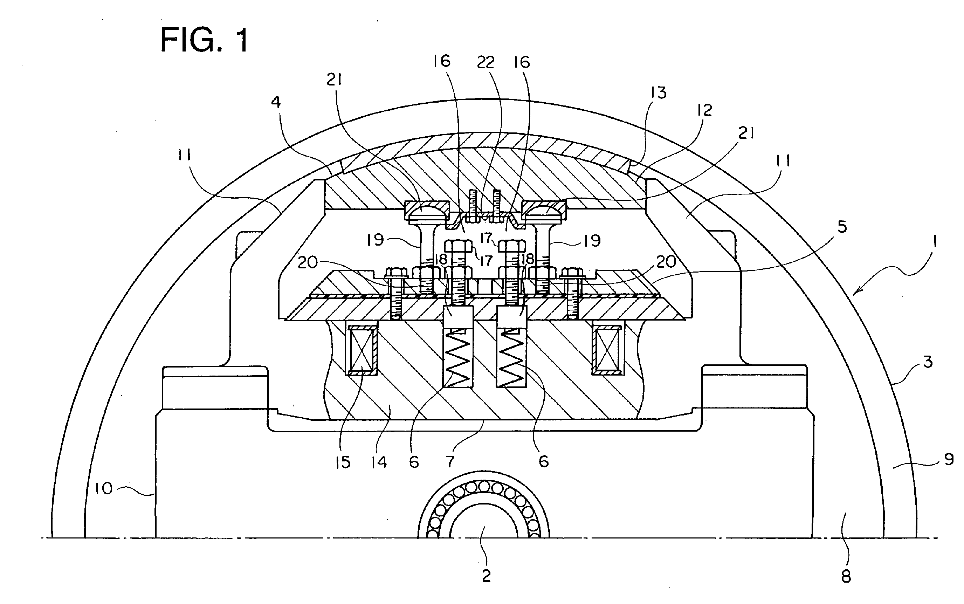

Fig. 1 is a sectional view showing part of a brake device for an elevator according to Embodiment 1 of the present invention. Referring to Fig. 1, a hoisting machine for an elevator for raising/lowering a car and a counterweight, and a brake device for an elevator (hereinafter simply referred to as "the brake device") 1 for braking the raising/lowering of the car and the counterweight are supported by a support member (not shown) provided within a hoistway.

The hoisting machine has a rotational shaft 2, which is rotated integrally with a drive pulley (not shown). A plurality of main ropes (not shown) for suspending the car and the counterweight are suspended around the drive pulley. The car and the counterweight are raised/lowered within the hoistway through rotation of the rotational shaft 2.

The brake device 1 and the hoisting machine are disposed side by side in an axial direction of the rotational shaft 2. The brake device 1 has a brake drum (rotary body) 3 for being rotated integrally with the rotational shaft 2, a braking body 4 movable so as to come into contact with and move away from the brake drum 3, a movable member 5 for being displaced together with the braking body 4, a plurality of springs (urging bodies) 6 for urging the movable member 5 in such a direction that the braking body 4 comes into contact with the brake drum 3, and an electromagnet 7 for displacing the movable member 5, against urging forces of the respective springs 6, in such a direction that the braking body 4 moves away from the brake drum 3.

The brake drum 3 has a circular disc 8 fixed perpendicularly to the rotational shaft 2, and a tubular drum portion 9 fixed to an outer periphery portion of the circular disc 8 and disposed coaxially with the rotational shaft 2. The braking body 4 is moved so as to come into contact with and move away from an inner peripheral surface of the drum portion 9.

A brake mounting member 10, which is fixed with respect to the support member, is disposed inside the drum portion 9. A pair of guide members 11 for guiding the braking body 4 in such a direction that the braking body 4 comes into contact with and moves away from the inner peripheral surface of the drum portion 9 are fixed to the brake mounting member 10.

The braking body 4 has a braking bodymain unit 12 slidable between the respective guidemembers 11, and a brake lining 13 provided on the braking body main unit 12 to be moved so as to come into contact with and move away from the inner peripheral surface of the drum portion 9 through displacement of the braking body 4. The brake lining 13 comes into contact with the inner peripheral surface of the drum portion 9, whereby rotation of the brake drum 3 is thereby braked.

The electromagnet 7 has a fixed core 14 fixed to the brake mounting member 10, and an electromagnetic coil 15 provided on the fixed core 14. The electromagnet 7 generates an electromagnetic attraction force for attracting the movable member 5 through energization of the electromagnetic coil 15.

The respective springs 6 are disposed between the movable member 5 and the fixed core 14. The respective springs 6 are contracted between the movable member 5 and the fixed core 14 to generate elastic repulsive forces (urging forces) in such a direction that the movable member 5 and the electromagnet 7 move away from each other. The magnitudes of the elastic repulsive forces of the respective springs 6 are adjusted by spring force adjusting devices 16. The movable member 5 is provided with the spring force adjusting devices 16.

Each of the spring force adjusting devices 16 has an adjusting bolt 17 screwed in the movable member 5, and a spring holding member 18 disposed between the adjusting bolt 17 and a corresponding one of the springs 6. The magnitude of the elastic repulsive force of each of the springs 6 is adjusted through an amount with which the adjusting bolt 17 is screwed into the movable member 5.

The movable member 5 is disposed between the braking body 4 and the electromagnet 7. The movable member 5 and the braking body 4 are coupled to each other via a plurality of coupling members 19. A screw portion 20, which is screwed into the movable member 5, is provided at one end of each of the coupling members 19. A spherical seat 21, to which the braking body 4 is fitted, is provided at the other end of each of the coupling members 19. The screw portion 20 is screwed into the movable member 5, whereby each of the coupling members 19 is fixed to the movable member 5. The braking body main unit 12 is pressed against the spherical seats 21 due to a spring force of a leaf spring strip 22, whereby the braking body 4 is fitted to the respective coupling members 19.

When energization of the electromagnetic coil 15 is started, the electromagnet 7 generates an electromagnetic attraction force, so the movable member 5 is displaced toward the electromagnet 7 against elastic repulsive forces of the respective springs 6. Thus, the braking body 4 is moved away from the inner peripheral surface of the drum portion 9. When energization of the electromagnetic coil 15 is stopped, the electromagnetic attraction force generated by the electromagnet 7 disappears, so the movable member 5 is displaced so as to move away from the electromagnet 7 due to elastic repulsive forces of the respective springs 6. Thus, the braking body 4 is pressed against the inner peripheral surface of the drum portion 9.

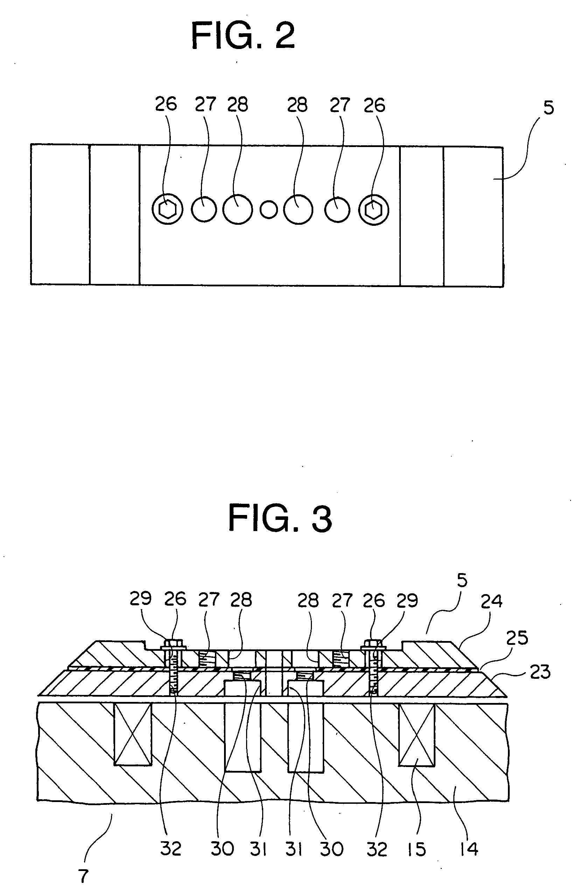

Fig. 2 is a plan view showing the movable member 5 of Fig. 1. Fig. 3 is a sectional view showing the movable member 5 and the electromagnet 7 of Fig. 1. As also shown in Figs. 2 and 3, the movable member 5 has a plurality of (two in this example) split plates (split strips) 23 and 24 superposed on each other, and an insulating sheet (insulating body) 25 interposed between the respective split plates 23 and 24. That is, the movable member 5 is manufactured by sandwiching the insulating sheet 25 between the two split plates 23 and 24. Used as a material of the split plates 23 and 24 is, for example, a magnetic material such as iron or the like. Used as a material of the insulating sheet 25 is, for example, a resin such as polyimide, polyether sulfone, or polycarbonate. In this example, the respective split plates 23 and 24 are superposed on each other in such a direction that the movable member 5 is displaced.

The movable member 5 is disposed between the electromagnet 7 and the braking body 4 such that one of the split plates 23 is opposed to the electromagnet 7 and that the other split plate 24 is opposed to the braking body 4. The other split plate 24 is fixed to the one of the split plates 23 by means of a plurality of fixing bolts 26.

The other split plate 24 is provided with a plurality of screw holes 27 into which the screw portions 20 of the respective coupling members 19 are screwed, through-holes 28 through which the respective adjusting bolts 17 are passed, and through-holes 29 through which the respective fixing bolts 26 are passed.

The one of the split plates 23 is provided with a plurality of screw fit portions 30 into which the adjusting bolts 17 passed through the respective through-holes 28 are screwed, a plurality of recess portions 31 leading continuously to the respective screw fit portions 30 in a thickness direction of the split plate 23 and having the spring holding member 18 disposed therein, and a plurality of bolt holes 32 into which the fixing bolts 26 passed through the respective through-holes 29 are screwed.

The insulating sheet 25 is provided with a plurality of passage holes through which the respective adjusting bolts 17 and the respective fixing bolts 26 are passed.

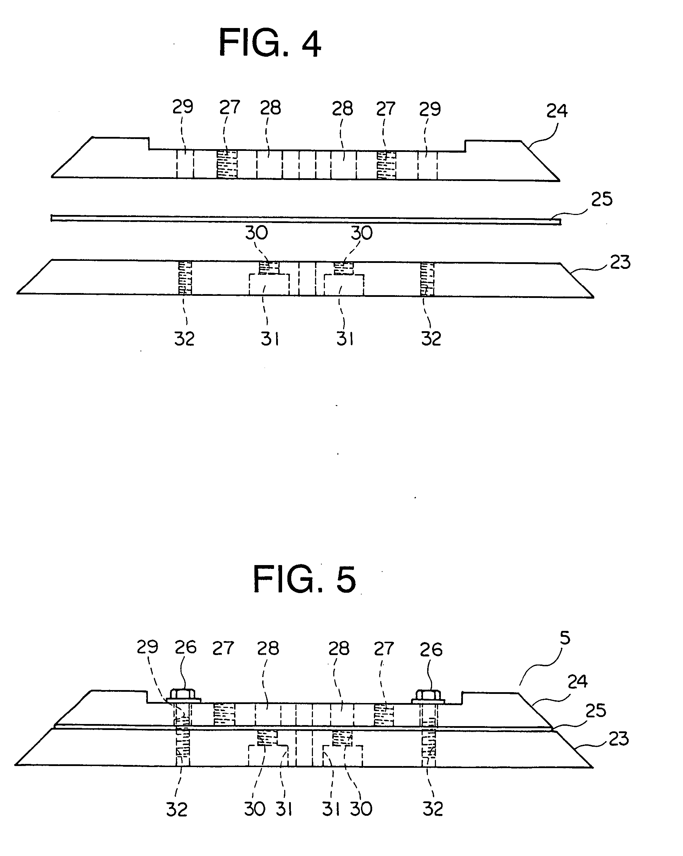

Next, a method of manufacturing the movable member 5 will be described. Fig. 4 is a lateral view showing a state where the one of the split plates 23, the other split plate 24, and the insulating sheet 25 of Fig. 3 are yet to be combined with one another. Fig. 5 is a lateral view showing a state where the one of the split plates 23, the other split plate 24, and the insulating sheet 25 have been combined with one another to constitute the movable member 5. As shown in Fig. 3, first, split surfaces of the one of the split plates 23 and the other split plate 24 are flat-finished. Then, the one of the split plates 23 is provided with the screw fit portions 30, the recess portions 31, and the bolt holes 32, and the other split plate 24 is provided with the screw holes 27 and the through-holes 28 and 29. The insulating sheet 25 is provided with the plurality of the passage holes.

After that, the insulating sheet 25 is superposed on the split surface of the one of the split plates 23. After that, the other split plate 24 is superposed on the insulating sheet 25 such that the split surface of the other split plate 24 is in contact with the insulating sheet 25. After that, the fixing bolts 26 are passed through the through-holes 29 and the passage holes respectively, and screwed into the bolt holes 32 respectively. After that, the respective fixing bolts 26 are tightened to fasten the other split plate 24 and the insulating sheet 25 to the one of the split plates 23. In this manner, the movable member 5 as shown in Fig. 4 is manufactured.

Next, anoperationwillbedescribed. When energization of the electromagnetic coil 15 is started, the electromagnet 7 generates an electromagnetic attraction force, so the movable member 5 is attracted by the electromagnet 7. Thus, the movable member 5 is displaced toward the electromagnet 7 against urging forces of the respective springs 6. Thus, the braking body 4 is moved away from the inner peripheral surface of the drum portion 9, so a braking force applied to the brake drum 3 is released.

When energization of the electromagnetic coil 15 is stopped, an overcurrent is generated in the respective split plates 23 and 24 due to a change in a magnetic flux from the electromagnet 7. Thus, a magnetic flux is generated in the movable member 5. Even after energization of the electromagnetic coil 15 has been stopped, generation of an attraction force between the movable member 5 and the electromagnet 7 is maintained.

The time required for disappearance of an overcurrent in the movable member 5 is prolonged as the overcurrent loss in the movable member 5 increases. The magnitude of an overcurrent loss is proportional to about the 1.6th power of a thickness of a member in which an overcurrent is generated. In the brake device 1, the movable member 5 is split into the split plates 23 and 24, so the overcurrent generated in the movable member 5 disappears more swiftly than in a case where the movable member 5 is designed as a single mass of iron.

After that, when the overcurrent in the movable member 5 decreases, the movable member 5 is displaced so as to move away from the electromagnet 7 due to urging forces of the respective springs 6, so the braking body 4 is pressed against the inner peripheral surface of the drum portion 9. Thus, rotation of the brake drum 3 is braked.

In the brake device 1 for an elevator constructed as described above, the movable member 5 has the plurality of the split plates 23 and 24 superposed on each other in the direction in which the movable member 5 is displaced, and the insulating sheet 25 interposed between the respective split plates 23 and 24. Therefore, the overcurrent loss in the movable member 5 can be reduced while maintaining the strength thereof, and the overcurrent generated in the movable member 5 can be caused to disappear swiftly. Thus, the time for the braking operation can be reduced.

That is, when the overcurrent remains in the movable member 5 even after energization of the electromagnetic coil 15 has been stopped, there remains an electromagnetic attraction force between the electromagnet 7 and the movable member 5 due to a magnetic flux resulting from the overcurrent, so the movable member 5 is not swiftly moved away from the electromagnet 7. In the brake device 1, however, the overcurrent generated in the movable member 5 can be caused to disappear swiftly. Therefore, after energization of the electromagnetic coil 15 has been stopped, the movable member 5 can be swiftly displaced toward the inner peripheral surface of the drum portion 9. As a result, the time for the braking operation can be reduced.

If the thickness of the movable member is lessened with a view to reducing the overcurrent loss, the strength of the movable member decreases. In the movable member 5, however, the plurality of the split plates 23 and 24 are superposed on each other. Therefore, the strength of the movable member 5 can be ensured as well.

### Embodiment 2

In the foregoing example, after the one of the split plates 23, the other split plate 24, and the insulating sheet 25 have been separately manufactured, the insulating sheet 25 is sandwiched between the one of the split plates 23 and the other split plate 24 to manufacture the movable member 5. However, it is also appropriate to form an insulating film on the split surface of the other split plate 24 to manufacture an insulating film forming body, and then combine the insulating film forming body with the one of the split plates 23 to manufacture the movable member.

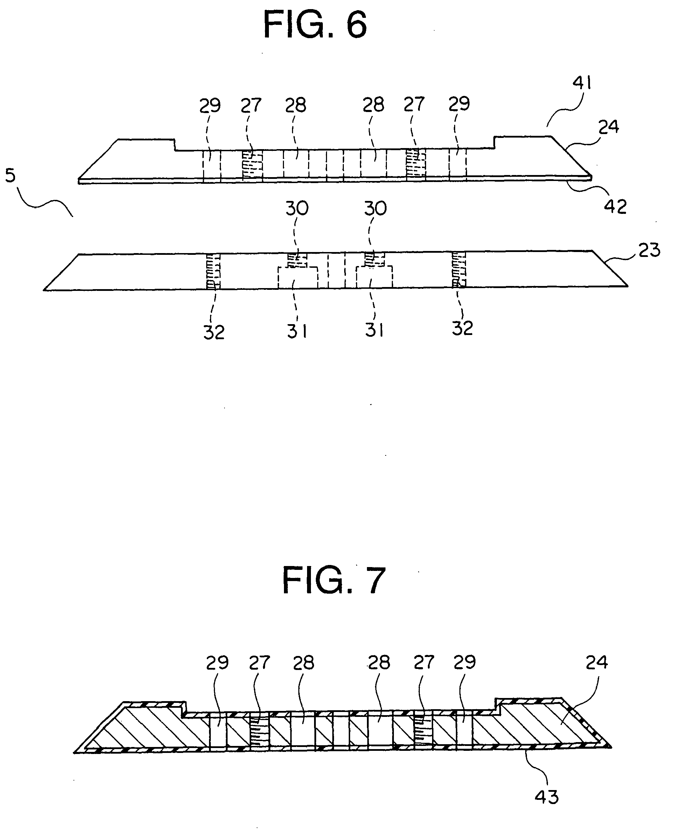

That is, Fig. 6 is a lateral view showing the one of the split plates 23 and an insulating film forming body 41 in a brake device for an elevator according to Embodiment 2 of the present invention. As shown in Fig. 6, the movable member 5 has the one of the split plates 23, and the insulating film forming body 41 superposed on the one of the split plates 23. The insulating film forming body 41 has the other split plate 24, and an insulating film 42 formed on the split surface of the other split plate 24 through vapor deposition or electrodeposition. The insulating film 42 is interposed between the one of the split plates 23 and the other split plate 24. Embodiment 2 of the present invention is identical to Embodiment 1 in other constructional details.

Next, a method of manufacturing the movable member 5 will be described. First, as is the case with Embodiment 1 of the present invention, after the split surfaces of the one of the split plates 23 and the other split plate 24 have been flat-finished, the one of the split plates 23 is provided with the screw holes 27 and the through-holes 28 and 29, and the other split plate 24 is provided with the screw fit portions 30, the recess portions 31, and the bolt holes 32.

After that, the insulating film 42 is formed only on the split surface of the other split plate 24 through vapor deposition or electrodeposition to constitute the insulating film forming body 41. Herein, a surface of the other split plate 24 except for the split surface thereof is masked such that the insulating film 42 is formed only on the split surface of the other split plate 24. After that, the insulating film forming body 41 is superposed on the one of the split plates 23 such that the insulating film 42 is in contact with the split surface of the one of the split plates 23. After that, the fixing bolts 26 are passed through the through-holes 29 respectively and screwed into the bolt holes 32 respectively. After that, the respective fixing bolts 26 are tightened to fasten the insulating film forming body 41 to the one of the split plates 23. In this manner, the movable member 5 is manufactured.

In the brake device for an elevator constructed as described above, the insulating film 42 is formed on the split surface of the other split plate 24, so the trouble of arranging the insulating body at a position between the one of the split plates 23 and the other split plate 24 can be eliminated. Thus, the time for an assembling operation performed in manufacturing the movable member 5 can be reduced, so a reduction in cost can be achieved.

In the foregoing example, the insulating film 42 is formed only on the split surface of the other split plate 24 . However, an insulating film may be formed only on the split surface of the one of the split plates 23. Further, insulating films may be formed on the split surfaces of the one of the split plates 23 and the other split plate 24 respectively.

In the foregoing example, the insulating film 42 is formed only on the split surface of the other split plate 24. However, as shown in Fig. 7, an insulating film 43 may be so formed as to cover the surface of the other split plate 24. In this construction, there is no need to carry out masking in forming the insulating film 43, so the movable member 5 can be manufactured more easily. Even when an insulating film is so formed as to cover a surface of the one of the split plates 23, a similar effect is achieved.

### Embodiment 3

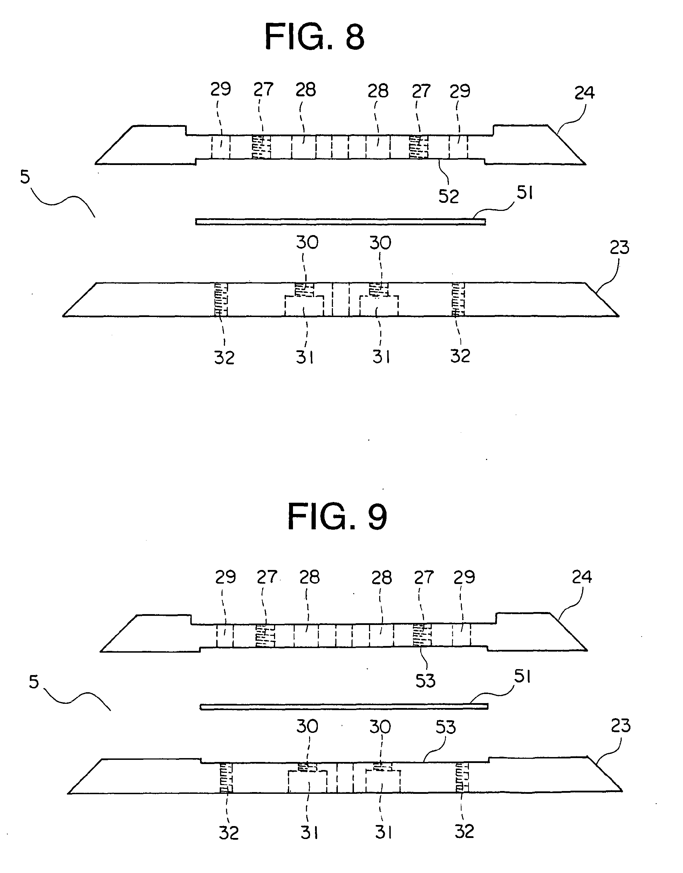

Fig. 8 is a lateral view showing the one of the split plates 23, the other split plate 24, and an insulating sheet 51 in a brake device for an elevator according to Embodiment 3 of the present invention. As shown in Fig. 8, the movable member 5 has the one of the split plates 23, the other split plate 24 superposed on the one of the split plates 23, and the insulating sheet (insulating body) 51 interposed between the one of the split plates 23 and the other split plate 24.

A depressed portion 52 is provided on the split surface of the other split plate 24. The insulating sheet 51 is fitted in the depressed portion 52. The depth of the depressed portion 52 is substantially equal to the thickness of the insulating sheet 51. Embodiment 3 of the present invention is identical to Embodiment 1 in other constructional details.

Next, a method of manufacturing the movable member 5 will be described. First, after the split surface of the one of the split plates 23 has been flat-finished, the one of the split plates 23 is provided with the screw fit portions 30, the recess portions 31, and the bolt holes 32. After that, the split surface of the other split plate 24 is provided with the depressed portion 52. Thus, the split surface of the other split plate 24 is left as a pair of abutment surfaces on both sides of the depressed portion 52. After that, the other split plate 24 is provided with the screw holes 27 and the through-holes 28 and 29, and then, the pair of the abutment surfaces are flat-finished. The insulating sheet 51 is molded in such a size as to be fitted in the depressed portion 52. The insulating sheet 51 is provided with the plurality of the passage holes.

After that, with the insulating sheet 51 fitted in the depressed portion 52, the other split plate 24 and the insulating sheet 51 are superposed on the one of the split plates 23 such that the insulating sheet 51 and the pair of the abutment surfaces are in contact with the split surface of the one of the split plates 23. After that, the fixing bolts 26 are passed through the through-holes 29 and the passage holes respectively and screwed into the bolt holes 32 respectively. After that, the respective fixing bolts 26 are tightened to fasten the other split plate 24 and the insulating sheet 51 to the one of the split plates 23. In this manner, the movable member 5 is manufactured.

In the brake device for an elevator constructed as described above, the depressed portion 52 in which the insulating sheet 51 is disposed is provided on the split surface of the other split plate 24, so the working operation range for flat finish can be confined to the pair of the abutment surfaces. Thus, the working time for manufacturing the other split plate 24 can be further reduced, so the time for manufacturing the movable member 5 can be further reduced. Thus, a further reduction in cost can be achieved as well.

In the foregoing example, the depressed portion 52 is provided only on the split surface of the other split plate 24. However, a depressed portion may be provided only on the split surface of the one of the split plates 23. Alternatively, as shown in Fig. 9, depressed portions 53 may be provided on the split surfaces of the one of the split plates 23 and the other split plate 24 respectively. In the case where the depressed portions 53 are provided on the split plates 23 and 24 respectively, the depth of each of the depressed portions 53 is substantially equal to half of the thickness of the insulating sheet 51.

In the foregoing respective embodiments of the present invention, the number of the split plates is two. However, three or more split plates may be provided. In this construction, the overcurrent loss in the entire movable member 5 can further be reduced, so the time for the braking operation of the brake device can further be reduced. In this case as well, insulating bodies are interposed between the split plates respectively.

## Claims

1. A brake device for an elevator, comprising:
a rotary body;
a braking body, which is movable so that the braking body comes into contact with and moves away from the rotary body, for braking rotation of the rotary body through contact with the rotary body;
a movable member for being displaced together with the braking body;
an urging body for urging the movable member in such a direction that the braking body comes into contact with the rotary body; and
an electromagnet, which has an electromagnetic coil, for generating an electromagnetic attraction force for attracting the movable member through energization of the electromagnetic coil, and displacing the movable member through generation of the electromagnetic attraction force, in such a direction that the braking body moves away from the rotary body, against urging by the urging body,
wherein the movable member has a plurality of split strips superposed on each other, and an insulating body interposed between the respective split strips.

2. The brake device for an elevator according to Claim 1, wherein the insulating body is an insulating film formed on at least one of the respective split strips.

3. The brake device for an elevator according to Claim 1 or 2, wherein the split strips are each provided with a depressed portion in which the insulating body is disposed.
